Europäisches Patentamt

European Patent Office

Office européen des brevets

(11) Numéro de publication : **0 496 661 B1**

# (12) FASCICULE DE BREVET EUROPEEN

(45) Date de publication du fascicule du brevet :
13.12.95 Bulletin 95/50

(51) Int. Cl.⁶ : **G01P 5/14,** G01P 5/16,
G01F 1/72, G01F 1/36

(21) Numéro de dépôt : **92400147.2**

(22) Date de dépôt : **21.01.92**

(54) **Procédé et dispositif de mesure de vitesse d'écoulement instationnaire**

(30) Priorité : **22.01.91 FR 9100691**

(43) Date de publication de la demande :
**29.07.92 Bulletin 92/31**

(45) Mention de la délivrance du brevet :
**13.12.95 Bulletin 95/50**

(84) Etats contractants désignés :
**AT BE CH DE DK ES FR GB GR IT LI LU MC NL
PT SE**

(56) Documents cités :
**DE-A- 3 203 986
FR-A- 2 509 867
US-A- 4 956 997**

(73) Titulaire : **CENTRE NATIONAL DE LA
RECHERCHE SCIENTIFIQUE (CNRS)
15, Quai Anatole France
F-75700 Paris Cedex 07 (FR)**

(72) Inventeur : **Peube, Jean-Laurent
7, rue des Couteliers
F-86530 Naintre (FR)**
Inventeur : **Amiot, Denis
Rue St-Pierre et Miquelon
F-50420 Tessy Sur Vire (FR)**

(74) Mandataire : **Martin, Jean-Jacques et al
Cabinet REGIMBEAU
26, Avenue Kléber
F-75116 Paris (FR)**

EP 0 496 661 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne le domaine de la mesure de vitesse d'un fluide en écoulement instationnaire.

Les mesures de vitesse sont des éléments essentiels à l'optimisation des processus industriels.

On a déjà proposé de nombreuses méthodes de mesure de la vitesse d'un fluide en écoulement continu et permanent.

A titre d'exemples, on peut citer des méthodes directes mettant en oeuvre des flotteurs, une chronophotographie, une vélocimétrie laser ou encore des moulinets et des méthodes indirectes mettant en oeuvre une mesure de la pression dymanique dans le fluide, une mesure de la masse volumique du fluide en écoulement, ou encore des méthodes à fil et film chauds.

Dans le cas de fluides incompressibles, non visqueux, en écoulement continu et permanent, la méthode de mesure de vitesse fondée sur la mesure de la pression cinétique exploite l'équation de Bernouilli sous sa forme intégrée :

$$(1) \qquad p + \rho gz + \tfrac{1}{2}\rho U^2 = cte$$

avec

p = pression statique locale dans le fluide,

$\rho$ = masse volumique locale du fluide,

g = champ de la pesanteur,

z = altitude,

U = module de la vitesse.

Pour des gaz, les variations de $\rho$ gz peuvent être considérées comme nulles.

La pression d'arrêt ou pression totale $p_i$ peut être exprimée sous la forme :

$$(2) \qquad p_i = p + \tfrac{1}{2}\rho U^2.$$

Le module de la vitesse peut donc être obtenu par différence entre la pression d'arrêt $p_i$ et la pression statique p :

$$(3) \quad U = \left[\frac{2\,(p_i - p)}{\rho}\right]^{1/2}$$

Cependant, les écoulements instationnaires rendent les opérations de mesure de vitesse particulièrement délicates. Diverses mesures de vitesse utilisées pour des fluides en écoulement continu et permanent ne sont pas applicables à des fluides en écoulement instationnaire.

En particulier, la mesure de vitesse fondée sur la mesure de la pression cinétique, qui a été rappelée ci-dessus, n'est pas exploitable pour des écoulements instationnaires. En effet, l'équation de Bernoulli (1) rappelée précédemment n'est pas applicable à ceux-ci, puisque comme cela sera indiqué par la suite, les équations de la mécanique des fluides en écoulement instationnaire font notamment intervenir la dérivée temporelle de la vitesse.

En conséquence, les méthodes couramment appliquées jusqu'ici pour mesurer la vitesse de fluides en écoulement instationnaire, consistent essentiellement en l'emploi de l'anémométrie à fil chaud ou bien de la vélocimétrie Laser à effet Doppler. Cependant la mise en oeuvre de ces techniques coûteuses, délicates et sophistiquées, est peu aisée et particulièrement mal adpatée à une utilisation en site industriel.

Le document DE-A-3203986 décrit un procédé et un dispositif pour la mesure de la vitesse d'écoulement instationnnaire d'un fluide, en particulier pour application à la mesure de l'écoulement d'air aspiré par un moteur à combustion interne. Le procédé décrit dans ce document comprend les étapes consistant à détecter les instants où l'accélération du fluide est nulle, définir une mesure de la vitesse du fluide aux instants où l'accélération est nulle et corriger la valeur de la vitesse du fluide obtenue précédemment, entre les instants où l'accélération est nulle, sur la base de la valeur d'une pression mesurée entre ces instants.

Plus précisément encore, les moyens décrits dans le document DE-A-3203986 comprennent un élément qui mesure la vitesse d'écoulement et délivrent en sortie une valeur q, ainsi qu'un capteur de pression qui mesure la pression du fluide au niveau d'un rétrécissement du conduit et délivre en sortie une valeur de pression $p_m$. La valeur $p_m$ est appliquée à un circuit soustracteur qui reçoit par ailleurs une valeur $p_s$ délivrée par une mémoire, laquelle valeur $p_s$ correspond à une valeur de pression pour un écoulement stationnaire de valeur q. Le circuit soustracteur précité calcule la différence entre $p_m$ et $p_s$. Lorsque la différence $p_m - p_s$ est égale à 0, le fluide n'est l'objet d'aucune pulsation et son accélération est nulle. Dans ce cas, la vitesse du fluide retenue est celle q issue de l'élément précité.

En revanche, lorsque l'amplitude de la pulsation a qui est proportionnelle à $p_m$ - $p_s$ est différente de 0, la valeur de cette amplitude de pulsation est appliquée à un autre circuit soustracteur qui reçoit par ailleurs une valeur d'écoulement $a_m$ qui est reliée à la valeur d'écoulement q mesurée par l'élément précité et provient d'une mémoire 13 adressée par cette valeur q. Lorsque la différence entre a et $a_m$ formée dans le second circuit soustracteur est inférieure à 0, la valeur de correction appliquée est égale à $k_1a$, le paramètre $k_1$ dépendant de la caractéristique de réponse de l'élément qui mesure l'écoulement et de l'amplitude de la pulsation a. En revanche, si la différence entre les amplitudes a et $a_m$ est supérieure à 0, le circuit de correction reçoit une valeur de correction qui est égale à $k_1a_m + k_2 (a-a_m)$, relation dans laquelle le paramètre $k_2$ provient d'une table mémorisée.

La présente invention a pour but d'éliminer les inconvénients de la technique antérieure.

Ce but est atteint selon la présente invention grâce à un procédé tel que défini en revendication 1 annexée.

Comme cela sera précisé par la suite, le procédé de mesure conforme à la présente invention permet un contrôle industriel de débits fortement pulsés en alliant prix réduit, simplicité de mise en oeuvre et fiabilité.

La présente invention concerne également un dispositif pour la mise en oeuvre du procédé précité.

D'autres caractéristiques, buts et avantages de la présente invention apparaîtront à la lecture de la description détaillée qui va suivre et en regard des dessins annexés donnés à titre d'exemples non limitatifs et sur lesquels :

- la figure 1 représente une vue schématique d'un obstacle du type tube de Pitot équipé de trois prises de pression, conforme à un premier mode de réalisation de la présente invention,
- les figures 2A, 2B et 2C représentent schématiquement différentes configurations d'autres modes de réalisation,
- la figure 3 représente une vue plus précise d'un obstacle du type tube de Pitot équipé de trois prises de pression conforme au premier mode de réalisation,
- la figure 4 représente un organigramme du procédé de mesure mis en oeuvre par ce premier mode de réalisation,
- la figure 5 représente les résultats de mesure obtenus à l'aide du premier mode de réalisation,
- les figures 6 et 7 illustrent schématiquement un autre mode de réalisation conforme à la présente invention, et
- la figure 8 représente schématiquement une variante de réalisation.

Dans la suite de la description, on va tout d'abord expliquer les caractéristiques essentielles du procédé de mesure de vitesse conforme à la présente invention, avant de décrire des modes de réalisation particuliers mettant celui-ci en oeuvre.

## CARACTERISTIQUES ESSENTIELLES DE L'INVENTION

Les équations de la mécanique des fluides en écoulement instationnaire font intervenir les dérivées temporelle et spatiale de la vitesse et le gradient de pression :

$$(4) \qquad \frac{\partial \vec{V}}{\partial t} + \vec{V} . \overline{\overline{\text{grad}}}\, \vec{V} = - \frac{1}{\rho}\, \overrightarrow{\text{grad}}\, p$$

Par intégration spatiale de la relation (4) on voit que la pression peut être exprimée comme une intégrale de volume de la vitesse et de sa dérivée par rapport au temps.

Les inventeurs ont ainsi déterminé qu'il était possible de connaître la vitesse locale et instantanée d'un écoulement instationnaire à partir de mesures de pression, en passant par une intégration temporelle et une propriété d'intégrale spatiale de la vitesse.

Cette propriété intégrale peut être obtenue au moyen de l'un des théorèmes généraux de la mécanique des fluides : théorème des débits de quantités de mouvements, théorème de l'énergie cinétique, deuxième théorème de Bernoulli pour les écoulements à potentiel, ...

Contrairement au cas des écoulements permanents, la présence de la dérivée temporelle de la vitesse dans la relation (4) montre qu'il n'est pas possible d'obtenir une relation locale et instantanée entre la vitesse et la pression, et qu'une intégration temporelle est donc nécessaire.

De là, les inventeurs ont proposé le procédé conforme à la présente invention, qui comme indiqué précédemment, comprend les étapes consistant à :

i) détecter les instants où l'accélération $\partial V/\partial t$ du fluide est nulle,

ii) définir une mesure de la vitesse du fluide aux instants où l'accélération est nulle, et

iii) déterminer les évolutions de la vitesse entre les instants d'accélération nulle par intégration numérique de l'écart entre deux pressions statiques.

## DESCRIPTIF GENERAL D'UN PREMIER MODE DE REALISATION

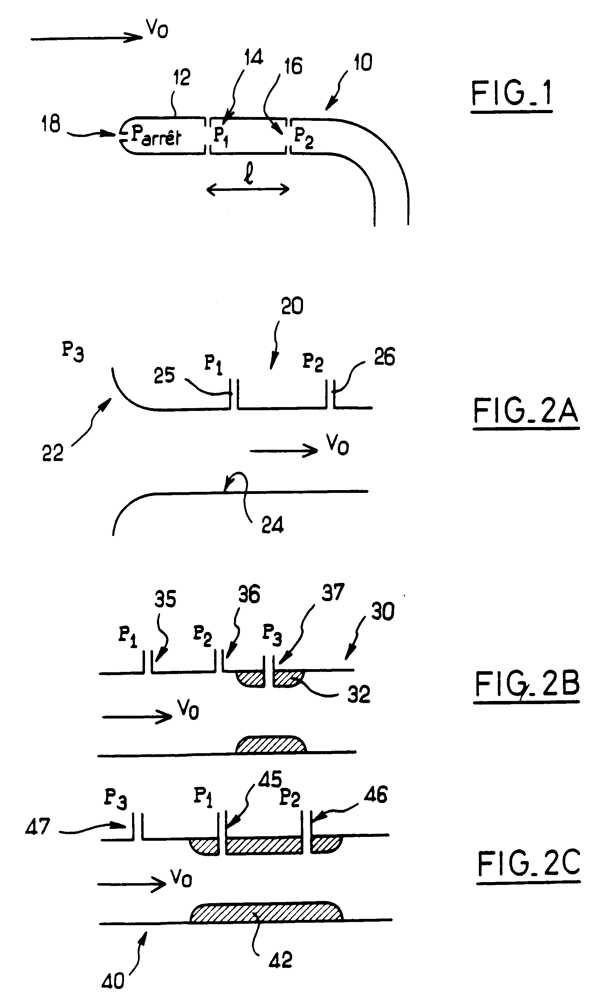

Pour réaliser pratiquement un premier dispositif de mesure de vitesse instationnaire par capteurs de pression, les inventeurs proposent, comme représenté sur la figure 1 annexée, d'utiliser un obstacle 10 placé dans le fluide en écoulement (un obstacle analogue à un tube de Pitot par exemple) et sur lequel sont placées des prises de pression 14, 16 et 18.

Si $V_0(t)$ désigne la vitesse dans laquelle est placé cet obstacle, la pression en un point de l'obstacle vérifie une loi ayant la forme (5) :

$$(5) \qquad \frac{\partial \Phi}{\partial t} + \frac{V^2}{2} + \frac{p}{\rho} = cte$$

dans laquelle $\Phi$ désigne le potentiel des vitesses et $V$ la vitesse au pont considéré, ces deux grandeurs étant proportionnelles à la vitesse $V_0(t)$ extérieure à l'obstacle, les constantes de proportionnalité ne dépendant que de la position du point sur l'obstacle.

En appliquant la relation (5) en deux points $M_1$ et $M_2$ au même instant, on obtient une relation de la forme (6) :

$$(6) \qquad a\frac{dV_0}{dt} + b\frac{V_0^2}{2} + \frac{p_1 - p_2}{\rho} = 0$$

où $a$ et $b$ sont deux constantes qu'on peut calculer ou mesurer en écoulement permanent par les méthodes classiques de la mécanique des fluides.

La connaissance de $V_0(t)$ à partir des mesures de $p_1 - p_2$ peut ainsi être obtenue en théorie par l'intégration numérique de l'équation différentielle (6) ; si l'acquisition de la mesure de la différence des pressions $p_1 - p_2$ est faite au moyen d'un système micro-informatique, le microprocesseur du sytème peut être programmé pour effectuer cet intégration numérique au fur et à mesure de l'acquisition des données.

Cependant, l'intégration numérique de l'équation différentielle (6) entraîne des erreurs numériques qui peuvent conduire à une valeur erronée si un recalage régulier des valeurs obtenues pour $V$ n'est pas effectué.

Dans ce but, les inventeurs proposent d'exploiter le fait que la relation (6) fournit directement la valeur de la vitesse $V_0(t)$ au moment où l'accélération $V_0'(t)$ est nulle. Plus précisément, on peut repérer directement l'instant correspondant sur la mesure de $p_1 - p_2$ pour pouvoir calculer la vitesse $V_0$ à cet instant de manière indépendante du processus d'intégration numérique de $V_0(t)$.

Ceci peut être réalisé, comme représenté sur la figure 1 annexée, en aménageant sur l'obstacle 10 une zone cylindrique 12 parallèle à la vitesse $V_0(t)$ du fluide en écoulement instationnaire et sur laquelle on a placé deux prises de pression statique 14, 16, distantes de l et entre lesquelles la différence de pression est égale à $\rho l\, dV_0/dt$. Entre ces prises de pression, la relation (6) se réduit à (7) :

$$(7) \qquad \frac{dV_0}{dt} + \frac{p_1 - p_2}{\rho l} = 0$$

De façon connue en soi, les prises de pression statique 14, 16 peuvent être formées de petits orifices pratiqués dans la partie cylindrique de l'obstacle 10 et reliés à des manomètres respectifs.

De préférence, le système représenté sur la figure 1 comprend également une prise de pression 18 sensible à la pression dynamique au point d'arrêt. Cette prise de pression d'arrêt 18 peut être formée d'un petit orifice pratiqué sur le nez de l'obstacle (formé de préférence d'une calotte hémisphèrique), au point d'arrêt et relié à un manomètre.

Dans ce cas, le procédé conforme à la présente invention comprend essentiellement les étapes qui consistent à :

i) détecter les instants où l'accélération du fluide est nulle, par détection de l'égalité entre les deux pression statiques $p_1$ et $p_2$ mesurées par les prises 14, 16,

ii) définir une mesure de la vitesse du fluide aux instants où l'accélération est nulle, sur la base de la pression d'arrêt mesurée par la prise 18 et de la pression statique $p_1$ mesurée par la prise 14, à l'aide de la relation :

$$(8) \qquad V = \sqrt{2\frac{(p_{arrêt} - p_1)}{\rho}} \ , et$$

iii) déterminer les évolutions de la vitesse entre les instants d'accélération nulle par intégration numérique de l'équation (6) précitée.

Pour cette étape iii), on peut également effectuer l'intégration directe de l'équation (7) qui est évidemment plus rapide que celle de (6) puisqu'il n'est pas nécessaire de calculer $V_0^2$ à chaque instant.

## DESCRIPTIF GENERAL D'UN SECOND MODE DE REALISATION

Il est intéressant de choisir une prise de pression sensible à la pression dynamique au point d'arrêt comme représenté sur la figure 1.

Cependant, on peut procéder d'autres manières: par exemple, en écoulement interne, on peut provoquer une variation de vitesse au moyen d'un rétrécissement de section comme représenté sur les figures 2A, 2B et 2C annexées.

On aperçoit sur la figure 2A une conduite profilée 20 comportant une première partie 22 convergeante qui aboutit à une deuxième partie 24 cylindrique. Deux prises de pression statique 25, 26 placées sur la partie cylindrique 24 mesurent des pressions $p_1$, $p_2$; Une autre prise de pression placée dans la première partie 22 mesure la pression $p_3$.

On aperçoit sur la figure 2B une autre conduite 30 comportant un rétrécissement 32. Deux prises de pression statique 35, 36 placées sur la partie cylindrique 34 de section constante de la conduite, mesurent des pressions $p_1$, $p_2$. Une troisième prise de pression statique 37 placée sur le rétrécissement 32 mesure la pression $p_3$.

On aperçoit sur la figure 2C une autre conduite 40 comportant un rétrécissement 42. Deux prises de pression statique 45, 46 placées sur le rétrécissement 42 mesurent des pressions $p_1$, $p_2$. Une troisième prise de pression statique 47 placée sur la partie la plus large de la conduite 40 mesure la pression $p_3$.

On peut alors à l'aide de l'un des systèmes représentés sur les figures 2A, 2B ou 2C mesurer la vitesse du fluide concerné à l'aide des étapes consistant à :

i) détecter les instants où l'accélération du fluide est nulle par détection de l'égalité entre les deux pressions statiques $p_1$, $p_2$ mesurées par les prises 25 et 26 ou 35, 36 ou 45 et 46,

ii) définir une mesure de la vitesse du fluide aux instants où l'accélération est nulle sur la base de la différence de pression $p_1$ - $p_3$ mesurée par les prises correspondanes telles que 35 et 37 ou 45 et 47, à l'aide de la relation:

$$(9) \qquad V = \sqrt{\frac{2\,(p_1 - p_3)}{\rho}} \text{ , et}$$

iii) déterminer les évolutions de la vitesse entre les instants d'accélération nulle par intégration de la différence $p_1$ - $p_2$.

Toutes les géométries des dispositifs mesurant des pressions statiques ou totales en écoulement permanent peuvent donc être utilisées dans le cadre du procédé conforme à la présente invention, pour obtenir des vitesses instationnaires d'écoulements pulsés unidimensionnelles en temps réels, à condition toutefois que le théorème de Bernouilli permanent puisse être appliqué instantanément au moment où l'accélération est nulle : ceci suppose que le dispositif utilisé ne présente pas de décollement, ce qui exclut toutes les géométries ne présentant pas un profil aérodynamique (tels que des diaphragmes en écoulement interne).

Selon les modes de réalisation précédemment décrits, la détection des instants où l'accélération du fluide est nulle est opérée par détection de l'égalité des indications mesurées par deux prises de pression statique. On peut également opérer la détection des instants où l'accélération du fluide est nulle par calcul de la vitesse en cours.

## PREMIER MODE DE REALISATION PARTICULIER

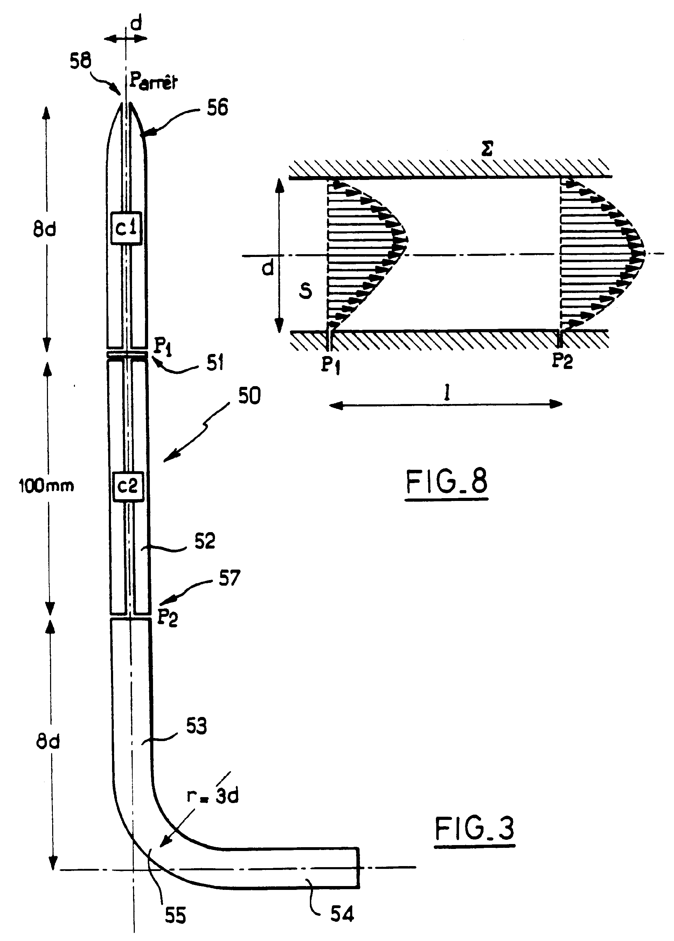

Les inventeurs ont réalisé un premier système de mesure comprenant un obstacle en forme d'antenne de Pitot équipé de trois prises de pression, tel qu'illustré sur la figure 3 annexée. Les caractéristiques géométriques de ce système de mesure respectent la Norme ISO 3966-1977 (F) des tubes de Pitot. Le respect de la norme a été choisi à titre d'exemple.

Plus précisément, on aperçoit sur la figure 3, un obstacle 50 similaire à celui de la figure 1 comprenant une première partie cylindrique 52 de section constante s'étendant parallèlement à l'écoulement instationnaire et prolongé à son extrémité arrière 53 par une seconde partie 54 transversale à l'écoulement instationnaire. Le nez 56 de la première partie cylindrique 52 est effilé, selon une enveloppe convexe régulière. Les parties cylindriques 52 et 54 possèdent de préférence le même diamètre d.

La zone de transition 55 qui relie les deux parties 53 et 54 a la forme générale d'un quart de tore possédant un rayon moyen égal à 3d. Une première prise de pression statique $p_1$ est prévue à distance du nez 56, sur la partie cylindrique 52. La première prise de pression 51 $p_1$ est prévue typiquement à une distance 8d du nez 56.

Une seconde prise de pression statique 57 $p_2$ est prévue en aval de la première, sur la partie cylindrique 52. La seconde prise de pression 57 est placée typiquement à une distance de la première prise 51 égale à

5

100mm. La seconde prise 57 est placée de préférence à une distance 8d de l'axe de la seconde partie 54.

Une troisième prise de pression 58 est ménagée axialement au sommet du nez 56 pour être sensible à la pression d'arrêt. Un premier capteur de pression différentielle c1 est placé entre les prises de pression 51 et 58. Il fournit un signal représentatif de la différence de pression $p_{arrêt} - p_1$. Un second capteur de pression différentielle c2 est placé entre les prises de pression 51 et 57. Il fournit un signal représentatif de la différence de pression $p_1 - p_2$. Le cas échéant ces pressions différentielles pourraient être obtenues à partir de trois capteurs de pression absolue, placés respectivement au niveau des trois prises de pression indiquées précédemment.

La prise de pression 51 $p_1$, reliée à la fois aux capteurs c1 et c2, a été doublée pour que la longueur de la liaison pneumatique allant à c1 n'ait pas d'effet sur la mesure faite par c2 et réciproquement. Les capteurs de pression c1 et c2 sont reliés par l'intermédiaire de préamplificateurs à un micro-ordinateur ou à une petite interface électronique assurant les fonctions suivantes :

- Acquisition des pressions ($p_{arrêt} - p_1$) et ($p_1 - p_2$) ;
- Calcul de la vitesse de débit ;
- Sortie d'un signal analogique proportionnel à la vitesse.

Le système ainsi décrit et représenté sur la figure 3 exploite aux instants où ($p_1 - p_2$) = 0 (c'est-à-dire : à chaque extremum de vitesse), le théorème de Bernouilli (loi des écoulements permanents) :

$$(10) \qquad p_1 + \rho\frac{v^2}{2} = p_{arrêt}$$

soit

$$(8) \qquad v = \sqrt{2\frac{p_{arrêt} - p_1}{\rho}}$$

Cela permet à la fois d'engager le processus de calcul de la vitesse et de le recaler à chaque extremum de vitesse.

Après discrétisation, le schéma de calcul devient :

$$(11) \qquad v^{n+1} = v^n + \frac{\Delta t}{\rho l}(p_1 - p_2)$$

quand ($p_1 - p_2$)=0      on a :

$$(8) \qquad v = \sqrt{2\frac{p_{arrêt} - p_1}{\rho}}$$

Ce schéma de calcul a été choisi à titre d'exemple. Une autre mode d'intégration numérique peut être choisie pour augmenter la précision du calcul.

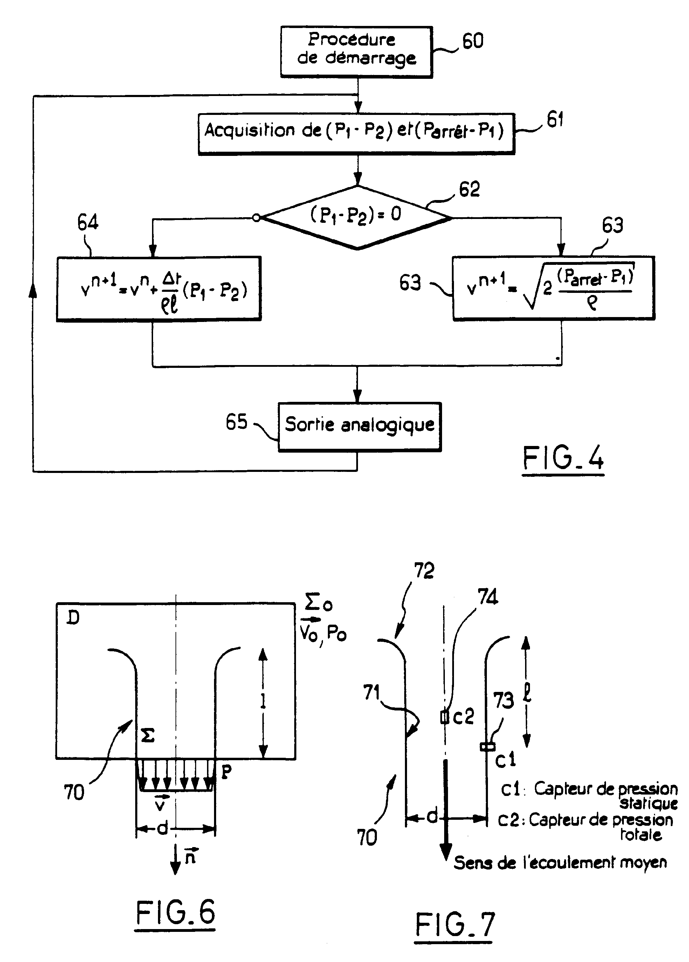

L'organigramme du processus de calcul est représenté sur la figure 4.

Après une phase de démarrage 60, le micro-ordinateur ou l'interface électronique procède à l'étape 61 à l'acquisition de pressions différentielles $p_1 - p_2$ et $p_{arrêt} - p_1$.

L'étape 61 est suivie d'une étape de test 62 correspondant à l'étape i) précitée au cours de laquelle le micro-ordinateur ou l'interface électronique détecte si les pressions $p_1$ et $p_2$ sont égales.

Dans l'affirmative, l'étape de test 62 est suivie d'une étape d'initiation du calcul de la vitesse et de recalage de celle-ci à chaque extremum sur la base de la relation (8). L'étape 63 correspond à l'étape ii) précitée.

Lorsque l'étape de test 62 est négative, elle est suivie de l'étape d'intégration 64, sur la base de l'équation (8). Cette étape 64 correspond à l'étape iii) précitée. La vitesse est exprimée au cours de l'étape 65.

La rapidité des systèmes informatiques modernes (micro-ordinateur type PC) permet d'effectuer ce calcul en temps réel. Pendant un temps $\Delta t$ (1/5000 sec.), le système réalise l'acquisition des pressions, le calcul de la vitesse correspondante et délivre un signal analogique proportionnel à la vitesse d'écoulement.

Le système réalisé conformément à la figure 3 a permis de mesurer la vitesse de débit d'un écoulement instationnaire formé par l'écoulement pulsé à l'admission d'un moteur automobile. Cette mesure, comparée à celle d'un anémomètre à fil chaud, est tout à fait satisfaisante, et a été testée pour des fréquences de pulsations allant jusqu'à 80 Hz. Le taux de modulation très important de l'écoulement ne paraît pas être une limitation.

Les résultats obtenus sont donnés sur la figure 5, sur laquelle on a représenté respectivement sous la référence TPI (pour Tube de Pitot Instationnaire) la courbe de mesure obtenue à l'aide du système conforme à la présente invention, et sous la référence AFC la courbe de mesure obtenue à l'aide d'un procédé classique d'anénomètrie à fil chaud.

L'erreur moyenne de la vitesse sur la courbe présentée est de : 1,75 %.

La sous-estimation moyenne du débit sur la courbe présentée est de : 0,5 %.

## DEUXIEME MODE DE REALISATION PARTICULIER

Les inventeurs ont réalisé un deuxième système dans lequel on ne dispose plus de deux prises de pression statique placées sur une paroi plane parallèle à une vitesse unique.

D'une façon générale, cette circonstance peut se rencontrer soit lorsqu'on ne dispose pas de partie cylindrique où l'écoulement est parallèle, soit lorsque celle-ci est trop courte pour donner une différence de pression $p_1 - p_2$ pouvant être mesurée avec une précision suffisante. Dans ce cas, la détection d'accélération nulle est faite grâce au calcul de la vitesse et non plus à l'aide d'une comparaison de deux pressions statiques.

Les inventeurs proposent de plus d'utiliser pour ce second mode de réalisation particulier le théorème de l'énergie cinétique :

$$(12) \quad \int_D \frac{\partial}{\partial t}(\rho\,\frac{v^2}{2})\,dv + \int_\Sigma (p+\rho g h+\rho\,\frac{v^2}{2})\,u_j n_j\,d\sigma = P_{v\sigma} - P_{vD}$$

où $P_{v\sigma}$ et $P_{vD}$ sont respectivement la puissance fournie par viscosité sur $\Sigma$ et la puissance dissipée par frottement dans D que l'on peut supposer nulles (voir figure 6).

On peut considérer, le cas d'un écoulement entrant dans une conduite profilée 70 et un domaine D, comme représenté sur la figure 6, dont la partie $\Sigma_0$ de frontière extérieure à la conduite est dans le fluide au repos et à une pression $p_0$, égale à la pression atmosphérique.

En désignant par p la pression statique mesurée à l'aide d'une prise de pression statique 73 sur la paroi 71 parallèle à l'écoulement, de la conduite 70, et en supposant l'entrée 72 de la conduite suffisamment bien profilée pour qu'il y ait peu de pertes de charges, on obtient l'équation:

$$(13) \quad \alpha \rho l \frac{\partial v}{\partial t} = (p - p_0) + \rho\frac{v^2}{2}$$

avec

$$(14) \quad \alpha = \int_D V_+^2\,dv \quad :$$

coefficient caractéristique de la répartition des vitesses calculé une fois pour toutes comme indiqué par la suite. $V_+$ est une vitesse sans dimension.

L'équation (13), comme l'équation (7), nécessite de fournir une valeur initiale à la vitesse et son intégration numérique est susceptible de diverger dans le temps en raison des erreurs diverses (arrondis, erreur de mesures, ...). Ces problèmes sont résolus comme précédemment en plaçant une prise de pression totale 74 dans l'écoulement et en appliquant le théorème de Bernouilli au moment où l'accélération s'annule.

La résolution de l'équation (13) demande, en plus, la connaissance du coefficient $\alpha$, lié à la géométrie de l'entrée de la conduite, et dont la détermination s'effectue une fois pour toutes. Celle-ci peut être effectuée de différentes manières, par exemple :
- par étalonnage comparatif ;
- en évaluant directement la vitesse de débit d'un écoulement périodique de période T.

Si la différence v(n+kT) - v(n) est nulle, la valeur de $\alpha$ estimée est bonne. Dans le cas contraire on incrémente ou décrémente $\alpha$ pour converger vers la bonne valeur (assez proche de l).

Plus précisément, on aperçoit sur la figure 7, une conduite profilée 70 dont l'entrée 72 diverge. Une prise de pression statique c1 73 placée à une distance l de l'embouchure de la conduite sur la paroi 71 de celle-ci mesure la pression statique p.

Une seconde prise de pression 74 c2 placée au centre de la conduite mesure la pression d'arrêt ou pression totale $p_{arrêt}$.

La structure de l'algorithme du procédé est la même que dans le cas de la première réalisation précitée.

Le procédé de mesure de vitesse comprend de ce fait, pour l'essentiel, les étapes consistant à :
- déterminer les évolutions de la vitesse entre les instants d'accélération nulle par intégration de l'équation :

$$(15) \quad v^{n+1} = v^n - \frac{\Delta t}{\alpha \rho l}(p - p_0 + \frac{\rho(v^n)^2}{2})$$

- détecter les instants où l'accélération du fluide est nulle par surveillance du résultat du calcul précédent, c'est-à-dire par surveillance des instants ou

$$(16) \qquad v^{n+1} = v^n$$

- recalage de la valeur de la vitesse quand

$$(16) \qquad v^{n+1} = v^n$$

à l'aide de l'équation

$$(17) \qquad v = \sqrt{2\frac{p_{arrêt} - p_1}{\rho}}$$

Une étude de faisabilité, réalisée sur un tube circulaire 70 comme représenté sur la figure 7 à l'entrée profilée 72 de diamètre 56mm, de longueur l=70mm (longueur entre l'atmosphère libre et le capteur de pression 73) à l'amont du système d'admission d'un moteur automobile, a montré que la méthode est capable de déterminer correctement la vitesse dans le tube.

## VARIANTE DE REALISATION UTILISANT LE THEOREME DES DEBITS DE QUANTITE DE MOUVEMENT

On va maintenant décrire une variante de réalisation utilisant le théorème des débits de quantité de mouvement.

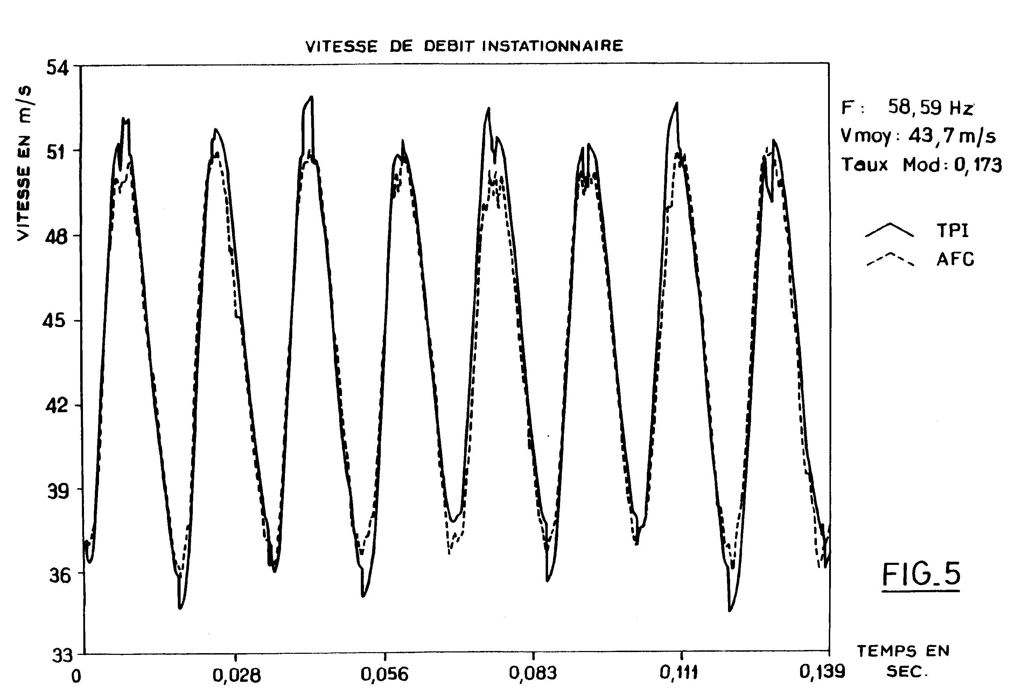

Considérons, comme cela est schématisé sur la figure 8 annexée, un écoulement en conduite cylindrique de diamètre d (section S), comportant deux prises p1, p2 de pression statique distantes de la longueur l. Le domaine D est un volume de surface fermée $\Sigma$, $\Sigma$ est limitée en longueur par les deux sections S situées à l'endroit des prises de pression p1 et p2.

En appliquant les approximations classiques des écoulements en conduite et en appliquant le théorème des débits de quantité de mouvement au cas considéré (en projection sur l'axe), nous obtenons la formulation suivante :

$$\int_D \rho \frac{\partial V}{\partial t} dv + \int_\Sigma V \, dq_m = \Sigma F_{ext} + (p_1 - p_2) S$$

avec $q_m$ = débit massique,
où les forces de viscosité représentées par la somme des forces extérieures sont souvent négligeables.
En régime permanent, l'équation devient :

$$\int_D \frac{\partial}{\partial t} (\rho V) dv + l \frac{U_q^2}{2} (\beta_1 - \beta_2) S = (p_1 - p_2) S$$

où $\beta_1$ et $\beta_2$ sont des coefficients caractérisant le profil des vitesses, et $U_q$ représente la vitesse sur l'axe de la conduite.

En intégrant le premier terme sur la surface S puis sur la longueur 1, nous obtenons l'équation ci-dessous :

$$\rho 1 S \frac{dU_q}{dt} + \rho \frac{U_q^2}{2} (\beta_1 - \beta_2) S = (p_1 - p_2) S$$

où la variation de débit $dU_q/dt$ est indépendante de la répartition des vitesses. Si le profil des vitesses est établi, alors $\beta_1$ est égale à $\beta_2$. Nous pouvons connaître ainsi le débit en fonction de la pression différentielle (p1 - p2).

Le procédé de mesure peut alors être ainsi mesuré :

i) les instants où l'accélération du fluide est nulle, c'est-à-dire les instants où les pressions détectées par les capteurs p1 et p2 sont égales, sont détectés.

ii) aux instants où l'accélération est nulle, la vitesse du fluide est définie sur la base du théorème de Bernoulli comme indiqué précédemment.

iii) entre les instants où l'accélération est nulle, les évolutions de la vitesse sont déterminées par intégration numérique de l'équation :

$$\rho 1 S \frac{dU_q}{dt} = (p_1 - p_2) S$$

Bien entendu la présente invention n'est pas limitée aux modes de réalisation particuliers qui viennent d'être décrits mais s'étend à toutes variantes conformes aux définitions en revendications annexées.

**Revendications**

1. Procédé de mesure de la vitesse d'écoulement instationnaire d'un fluide, du type comprenant les étapes consistant à :

   i) détecter les instants où l'accélération du fluide est nulle (62),

   ii) définir une mesure de la vitesse du fluide aux instants où l'accélération est nulle (63), et

   iii) corriger (64) la valeur de la vitesse du fluide obtenue à l'étape ii), entre les instants où l'accélération est nulle, sur la base de la valeur d'une pression mesurée entre ces instants,

   caractérisé par le fait que l'étape iii) consiste à mesurer au même temps deux pressions statiques en deux emplacements séparés du fluide, déterminer les évolutions de la vitesse entre les instants d'accélération nulle par intégration numérique temporelle de l'écart entre ces deux pressions statiques ($p_1, p_2$) et additionner (64) les évolutions de la vitesse ainsi obtenues par intégration numérique à la valeur de la vitesse de fluide obtenue à l'étape ii) aux instants où l'accélération est nulle.

2. Procédé de mesure selon la revendication 1, caractérisé de plus par le fait que l'étape i) de détection des instants où l'accélération du fluide est nulle est opérée par calcul de la vitesse en cours.

3. Procédé de mesure selon la revendication 1, caractérisé de plus par le fait que l'étape i) de détection des instants où l'accélération du fluide est nulle est opérée par détection de l'égalité des indications fournies par deux prises de pression statique.

4. Procédé de mesure selon l'une des revendications 1 à 3, caractérisé de plus par le fait que l'étape ii) consiste à définir la vitesse aux instants où l'accélération est nulle sur la base de la relation :

$$(8) \qquad V = \sqrt{\frac{2\,(p_{arrêt} - p_1)}{\rho}}$$

avec

   V = module de la vitesse

   $p_1$ = pression statique

   $\rho$ = masse volumique locale du fluide, et

   $p_{arrêt}$ = pression dynamique sur un point d'arrêt.

5. Procédé de mesure selon l'une des revendications 1 à 4, caractérisé de plus par le fait que l'étape iii) consiste à intégrer l'équation

$$(6) \qquad a\,\frac{dV_0}{dt} + b\,\frac{V_0^2}{2} + \frac{p_1 - p_2}{\rho} = 0$$

avec a et b des constantes du système utilisé

   $V_0$ = module de la vitesse

   $p_1$ et $p_2$ = pressions mesurées au même instant en deux points du système, et

   $\rho$ = masse volumique locale du fluide.

6. Procédé de mesure selon l'une des revendications 1 à 4, caractérisé de plus par le fait que l'étape iii) consiste à intégrer l'équation :

$$(7) \qquad \frac{dV_0}{dt} + \frac{p_1 - p_2}{\rho l} = 0$$

avec

   $V_0$ = module de la vitesse

   $p_1$ et $p_2$ = pressions mesurées au même instant en deux points du système,

   l représente la distance entre les deux points de mesure, et

   $\rho$ = masse volumique locale du fluide.

7. Procédé de mesure selon l'une des revendications 1 à 4, caractérisé de plus par le fait que l'étape iii) consiste à intégrer l'équation :

$$(13) \qquad \alpha \rho l\,\frac{\partial v}{\partial t} = (p - p_0) + \rho\,\frac{v^2}{2}$$

avec

   avec $\alpha$ représentant un coefficient d'énergie cinétique,

   v représente la vitesse

   $\rho$ représente la masse volumique locale du fluide,

9

l représente la distance entre l'embouchure de la conduite et une prise de pression statique mesurant la pression p,

$p_0$ représente la pression atmosphérique.

8. Dispositif de mesure de la vitesse d'écoulement instationnaire d'un fluide, pour la mise en oeuvre du procédé conforme à l'une des revendications 1 à 7, comprenant :
   - des moyens aptes à détecter (62) les instants où l'accélération du fluide est nulle,
   - des moyens aptes à définir (63) une mesure de la vitesse du fluide aux instants où l'accélération est nulle,
   - des moyens aptes à corriger (64) la valeur de la vitesse du fluide obtenue, entre les instants où l'accélération est nulle, sur la base de la valeur d'une pression mesurée entre ces instants, et
   - des moyens aptes à exprimer (65) cette valeur de la vitesse,
   caractérisé par le fait que les moyens de correction comprennent des moyens aptes à mesurer au même temps deux pressions statiques ($p_1$,$p_2$) en deux emplacements séparés du fluide, des moyens (63) aptes à déterminer les évolutions de la vitesse entre les instants d'accélération nulle par intégration numérique temporelle de l'écart entre ces deux pressions statiques ($p_1$,$p_2$) et des moyens (64) aptes à additionner les évolutions de la vitesse obtenues par intégration numérique à la valeur de la vitesse de fluide obtenue aux instants où l'accélération est nulle.

9. Dispositif de mesure selon la revendication 8, caractérisé de plus par le fait que les moyens (62) aptes à détecter les instants où l'accélération du fluide est nulle comprennent deux prises de pression statique (14, 16) et des moyens aptes à surveiller l'égalité des deux pressions mesurées.

10. Dispositif de mesure selon la revendication 8, caractérisé de plus par le fait que les moyens (62) aptes à détecter les instants où l'accélération du fluide est nulle comprennent des moyens de surveillance de la vitesse calculée.

11. Dispositif de mesure selon l'une quelconque des revendications 8 ou 9, caractérisé de plus par le fait qu'il comprend un obstacle du type tube de Pitot (10) équipé de trois prises de pression (14,16,18)

12. Dispositif de mesure selon la revendication 11, caractérisé de plus par le fait qu'il comprend deux prises de pression statique (51, 57) espacées sur une partie (52) de l'obstacle (50) parallèle à l'écoulement, une prise de pression d'arrêt (58) au nez de l'obstacle et deux capteurs de pression différentielle (c1, c2), ou trois capteurs de pression absolue.

13. Dispositif de mesure selon la revendication 12, caractérisé de plus par le fait que les moyens aptes à définir la mesure de la vitesse du fluide aux instants où l'accélération est nulle exploitent l'équation

$$(8) \qquad v = \sqrt{2 \frac{p_{arrêt} - p_1}{\rho}} \text{ et,}$$

les moyens aptes à déterminer les évolutions de la vitesse exploitent l'équation

$$(7) \qquad \frac{dV_0}{dt} + \frac{p_1 - p_2}{\rho l} = 0$$

avec $V_0$ et v = module de la vitesse,
$p_{arrêt}$ = pression mesurée sur un point d'arrêt, $p_1$ et $p_2$ = deux pressions statiques mesurées au même instant en deux points du système, $\rho$ = masse volumique locale du fluide, et l = distance entre les deux points de mesure.

14. Dispositif de mesure selon l'une des revendications 8 ou 9, caractérisé de plus par le fait qu'il comprend une conduite (30,40) munie d'un rétrécissement (32,42) et trois prises de pression statique (35,36,37;45,46,47).

15. Dispositif de mesure selon la revendication 14, caractérisé de plus par le fait que les moyens de détection des instants d'accélération nulle comprennent des moyens de détection de l'égalité entre deux pressions statiques ($p_1$,$p_2$) mesurées à distance sur une partie de la conduite de section constante, les moyens définissant la mesure de la vitesse du fluide aux instants d'accélération nulle exploitent la différence de pression entre l'une des pressions précitées et la troisième pression ($p_3$) mesurée sur une zone de section différentielle de la conduite, et les moyens déterminant les évolutions de la vitesse intègrent la différence

entre les deux pressions premières citées.

16. Dispositif de mesure selon la revendication 15, caractérisé de plus par le fait que les deux pressions statiques premières citées ($p_1$, $p_2$) sont prélevées sur une partie de section constante de la conduite tandis que la troisième pression ($p_3$) est prélevée sur l'embouchure évasée (22) de la conduite.

17. Dispositif de mesure selon la revendication 15, caractérisé de plus par le fait que les deux pressions statiques ($p_1$,$p_2$) premières citées sont prélevées à distance sur une partie de section constante de la conduite tandis que la troisième pression statique ($p_3$) est mesurée au niveau d'un rétrécissement (32).

18. Dispositif de mesure selon la revendication 15, caractérisé de plus par le fait que les deux pressions statiques premières citées ($p_1$,$p_2$) sont mesurées au niveau d'un rétrécissement (42) de section constante tandis que la troisième pression statique ($p_3$) est mesurée à l'extérieur du rétrécissement.

19. Dispositif de mesure selon l'une des revendications 8 ou 18, caractérisé de plus par le fait qu'il comprend une conduite profilée (70), un capteur de pression statique (73) sur la paroi de la conduite et un capteur (74) de pression totale.

20. Dispositif de mesure selon la revendication 19, caractérisé de plus par le fait que
    - les moyens (62) aptes à détecter les instants d'accélération nulle surveillent la vitesse calculée ,
    - les moyens (63) définissant la vitesse aux instants où l'accélération est nulle exploitent l'équation

$$(17) \qquad v = \sqrt{2 \frac{p_{arr\hat{e}t} - p_l}{\rho}}$$

    - les moyens (64) déterminant les évolutions de la vitesse entre les instants d'accélération nulle exploitent l'équation :

$$(15) \qquad v^{n+1} = v^n - \frac{\Delta t}{\alpha \rho l} (p - p_0 + \frac{\rho (v^n)^2}{2})$$

avec

$\alpha$ représente un coefficient d'énergie cinétique,
$\rho$ représente la masse volumique du fluide,
$l$ représente la distance entre la prise de pression statique (73) et l'ebouchure de la conduite,
$p$ représente la pression statique,
$p_0$ représente la pression atmosphérique, et
$p_{arr\hat{e}t}$ représente la pression totale,
$v$ représente la vitesse, $v^n$ correspondant à cette vitesse à un instant n et $v^{n+1}$ correspondant à la vitesse à l'instant n+1,
$p1$ représente une pression statique.


## Patentansprüche

1. Verfahren zum Messen der Geschwindigkeit der instationären Strömung eines Fluides des Typs, der Stufen aufweist, bestehend aus dem:
    i) Erfassen der Zeitpunkte, in denen die Beschleunigung des Fluides Null (62) ist,
    ii) Definieren eines Maßes der Geschwindigkeit des Fluides an den Zeitpunkten, in denen die Beschleunigung Null (63) ist und
    iii) Korrigieren (64) des Wertes der Geschwindigkeit des Fluides, der in der Stufe ii) erhalten wurde zwischen den Zeitpunkten, in denen die Beschleunigung Null ist, auf der Basis des Wertes eines Drucks, der zwischen diesen Zeitpunkten gemessen worden ist,
    dadurch gekennzeichnet, daß die Stufe iii) daraus besteht, gleichzeitig zwei statische Drücke an zwei getrennten Orten des Fluides zu messen, die Strömungen der Geschwindigkeit zwischen den Zeitpunkten der Beschleunigung Null durch numerische zeitliche Integration des Abstandes zwischen diesen beiden statischen Drücken ($p_1$, $p_2$) zu bestimmen und die Strömungen der Geschwindigkeit, die so durch numerische Integration erhalten worden sind, zu dem Wert der Geschwindigkeit des Fluides, der in der Stufe ii) an den Zeitpunkten, an denen die Beschleunigung Null ist, erhalten worden ist, zu addieren.

2. Meßverfahren nach Anspruch 1, weiter dadurch gekennzeichnet, daß die Stufe i) der Erfassung der Zeitpunkte, in denen die Beschleunigung des Fluides Null ist, durch Berechnung der laufenden Geschwindigkeit durchgeführt wird.

3. Meßverfahren nach Anspruch 1, weiter dadurch gekennzeichnet, daß die Stufe i) des Erfassens der Zeitpunkte, in denen die Beschleunigung des Fluides Null ist, durch Erfassung der Gleichheit der Angaben durchgeführt wird, die durch zwei Abgriffe des statischen Druckes geliefert werden.

4. Meßverfahren nach einem der Ansprüche 1 bis 3, weiter dadurch gekennzeichnet, daß die Stufe ii) darin besteht, die Geschwindigkeit zu den Zeitpunkten, in denen die Beschleunigung Null ist, auf der Basis der Beziehung zu definieren:

$$(8) \qquad V = \sqrt{\frac{2(p_{Halte} - p_1)}{\rho}}$$

mit

$V =$      Modul der Geschwindigkeit

$p_1 =$      statischer Druck

$\rho =$      lokale Dichte des Fluides und

$p_{Halte} =$      dynamischer Druck an einem Haltepunkt

5. Meßverfahren nach einem der Ansprüche 1 bis 4, weiter dadurch gekennzeichnet, daß die Stufe iii) darin besteht, die Gleichung

$$(6) \qquad a\frac{dV_0}{dt} + b\frac{V_0^2}{2} + \frac{p_1 - p_2}{\rho} = 0$$

zu integrieren, wobei a und b Konstanten des verwendeten Systems sind,

$V_0 =$      Modul der Geschwindigkeit

$p_1$ und $p_2 =$      Drücke, die zum selben Zeitpunkt an zwei Punkten des Systems gemessen worden sind, und

$\rho =$      lokale Dichte des Fluids

6. Meßverfahren nach einem der Ansprüche 1 bis 4, weiter dadurch gekennzeichnet, daß die Stufe iii) darin besteht, die Gleichung:

$$(7) \qquad \frac{dV_0}{dt} + \frac{p_1 - p_2}{\rho l} = 0$$

zu integrieren,

mit $V_0$ = Modul der Geschwindigkeit

$p_1$ und $p_2$ = Drücke, die zum selben Zeitpunkt an zwei Punkten des Systems gemessen worden sind,

l stellt die Entfernung zwischen den beiden Meßpunkten dar und

$\rho$ = lokale Dichte des Fluids.

7. Meßverfahren nach einem der Ansprüche 1 bis 4, weiter dadurch gekennzeichnet, daß die Stufe iii) darin besteht, die Gleichung

$$(13) \qquad \alpha \rho l \frac{\partial v}{\partial t} = (p - p_0) + \rho \frac{v^2}{2}$$

zu integrieren, wobei $\alpha$ einen Koeffizienten der kinetischen Energie darstellt,

v die Geschwindigkeit darstellt,

p die lokale Dichte des Fluides darstellt,

l die Entfernung zwischen der Mündung der Leitung und einer Abgriffstelle des statischen Druckes darstellt, an der der Druck p gemessen wird,

$p_0$ den Atmosphärendruck darstellt.

8. Vorrichtung zum Messen der Geschwindigkeit der instationären Strömung eines Fluides zum Durchführen des Verfahrens nach einem der Ansprüche 1 bis 7, mit:
   - Einrichtungen zum Erfassen (62) der Zeitpunkte, in denen die Beschleunigung des Fluides Null ist,
   - Einrichtungen zum Definieren (63) eines Maßes der Geschwindigkeit des Fluides zu den Zeitpunkten, in denen die Beschleunigung Null ist,
   - Einrichtungen zum Korrigieren (64) des erhaltenen Wertes der Geschwindigkeit zwischen den Zeitpunkten, in denen die Beschleunigung Null ist, auf der Basis des Wertes eines Druckes, der zwischen diesen Zeitpunkten gemessen worden ist, und

- Einrichtungen zum Ausdrücken (65) dieses Geschwindigkeitswertes,
dadurch gekennzeichnet, daß die Korrektureinrichtungen Einrichtungen zum gleichzeitigen Messen zweier statischer Drücke ($p_1$, $p_2$) an zwei getrennten Orten des Fluides,
- Einrichtungen (63) zum Bestimmen der Strömungen der Geschwindigkeit zwischen den Zeitpunkten der Beschleunigung Null durch numerische zeitverzögerte Integration des Abstandes zwischen diesen beiden statischen Drücken ($p_1$, $p_2$) und Einrichtungen (64) zum Addieren der Strömungen der Geschwindigkeit, die durch numerische Integration erhalten worden sind, zu dem Wert der Geschwindigkeit des Fluides, der in den Zeitpunkten erhalten worden ist, wo die Beschleunigung Null ist, aufweist.

9. Meßvorrichtung nach Anspruch 8, weiter dadurch gekennzeichnet, daß die Einrichtungen (62) zum Erfassen der Zeitpunkte, an denen die Beschleunigung des Fluides Null ist, zwei Aufnahmestellen für den statischen Druck (14, 16) und Einrichtungen zum Überwachen der Gleichheit der beiden gemessenen Drücke aufweist.

10. Meßvorrichtung nach Anspruch 8, weiter dadurch gekennzeichnet, daß die Einrichtungen (62) zum Erfassen der Zeitpunkte, an denen die Beschleunigung des Fluides Null ist, Überwachungseinrichtungen für die berechnete Geschwindigkeit aufweisen.

11. Meßvorrichtung nach einem der Ansprüche 8 oder 9, weiter dadurch gekennzeichnet, daß sie ein Hindernis vom Typ des Pitot-Rohres (10) aufweist, das mit drei Druckabgriffstellen (14, 16, 18) ausgestattet ist.

12. Meßvorrichtung nach Anspruch 11, weiter dadurch gekennzeichnet, daß sie zwei Abgriffstellen für den statischen Druck (51, 57) aufweist, die auf einem Teil (52) des Hindernisses (50) parallel zu der Strömung beabstandet sind, eine Abgriffstelle für den Haltedruck (58) an der Nase des Hindernisses und zwei Differentialdruckaufnehmer (c1, c2) oder drei Absolutdruckaufnehmer aufweist.

13. Meßvorrichtung nach Anspruch 12, weiter dadurch gekennzeichnet, daß die Einrichtungen zum Definieren des Maßes der Geschwindigkeit des Fluides zu den Zeitpunkten, in denen die Beschleunigung Null ist, die Gleichung

$$(8) \qquad v = 2\sqrt{\frac{p_{Halte} - p_1}{\rho}}$$

ausnutzen und die Einrichtungen zum Bestimmen der Strömungen der Geschwindigkeit die Gleichung

$$(7) \qquad \frac{dV_0}{dt} + \frac{p_1 - p_2}{\rho l} = 0$$

ausnutzen, wobei $V_0$ und v = Modul der Geschwindigkeit, $P_{Halte}$ = Druck, der an einem Haltepunkt gemessen ist, $p_1$ und $p_2$ = zwei statische Drücke, die zum selben Zeitpunkt an zwei Punkten des Systems gemessen worden sind, $\rho$ = lokale Dichte des Fluides und l = Entfernung zwischen den beiden Meßpunkten.

14. Meßvorrichtung nach einem der Ansprüche 8 oder 9, weiter dadurch gekennzeichnet, daß sie eine Leitung (30, 40) aufweist, die mit einer Verengung (32, 42) und drei Abgriffstellen für den statischen Druck (35, 36, 37; 45, 46, 47) versehen ist.

15. Meßvorrichtung nach Anspruch 14, weiter dadurch gekennzeichnet, daß die Einrichtungen zum Erfassen der Zeitpunkte der Beschleunigung Null Einrichtungen zum Erfassen der Gleichheit zweier statischer Drücke ($p_1$, $p_2$) aufweisen, die entfernt voneinander auf einem Teil der Leitung mit konstantem Querschnitt gemessen worden sind, wobei die Einrichtungen, die das Maß der Geschwindigkeit des Fluides in den Zeitpunkten mit Beschleunigung Null definieren, den Druckunterschied zwischen dem einen der vorgenannten Drücke und dem dritten Druck ($p_3$) ausnutzen, der in einem Bereich mit differentiellem Querschnitt der Leitung gemessen worden ist, und wobei die Einrichtungen, die die Strömungen der Geschwindigkeit bestimmen, die Differenz zwischen den beiden ersten genannten Drücken integrieren.

16. Meßvorrichtung nach Anspruch 15, weiter dadurch gekennzeichnet, daß die beiden ersten genannten statischen Drücke ($p_1$, $p_2$) auf einem Teil mit konstantem Querschnitt der Leitung abgegriffen werden, während der dritte Druck ($p_3$) an einer konisch erweiterten Mündung (22) der Leitung abgegriffen wird.

17. Meßvorrichtung nach Anspruch 15, weiter dadurch gekennzeichnet, daß die beiden genannten ersten statischen Drücke ($p_1$, $p_2$) im Abstand auf einem Teil mit konstantem Querschnitt der Leitung abgegriffen werden, während der dritte statische Druck ($p_3$) auf der Höhe einer Einengung (32) gemessen wird.

18. Meßvorrichtung nach Anspruch 15, weiter dadurch gekennzeichnet, daß die beiden genannten ersten statischen Drücke ($p_1$, $p_2$) auf der Höhe einer Verengung (42) mit konstantem Querschnitt gemessen werden, während der dritte statische Druck ($p_3$) außerhalb der Verengung gemessen wird.

19. Meßvorrichtung nach einem der Ansprüche 8 oder 18, weiter dadurch gekennzeichnet, daß sie eine profilierte Leitung (70), einen Aufnehmer (73) für den statischen Druck an der Wand der Leitung und einen Aufnehmer (74) für den Gesamtdruck aufweist.

20. Meßvorrichtung nach Anspruch 19, weiter dadurch gekennzeichnet, daß
   - die Einrichtungen (62) zum Erfassen der Zeitpunkte mit Beschleunigung Null die berechnete Geschwindigkeit überwachen,
   - die Einrichtungen (63), die die Geschwindigkeit zu den Zeitpunkten, in denen die Beschleunigung Null ist, definieren, die Gleichung

$$(17) \qquad v = \sqrt{2\frac{p_{Halte} - p_1}{\rho}}$$

ausnutzen,
   - die Einrichtungen (64), die die Strömungen der Geschwindigkeit zwischen den Zeitpunkten der Beschleunigung Null bestimmen, die Gleichung:

$$(15) \qquad v^{n+1} = v^n - \frac{\Delta t}{\alpha \rho l}(p - p_0 + \frac{\rho(v^n)^2}{2})$$

ausnutzen,
wobei $\alpha$ einen Koeffizienten der kinetischen Energie darstellt,
$\rho$ die Dichte des Fluides darstellt
$l$ die Entfernung zwischen dem Abgriff des statischen Drucks (73) und der Mündung der Leitung darstellt
$p$ den statischen Druck darstellt
$p_0$ den Atmosphärendruck darstellt und
$p_{Halte}$ den Gesamtdruck darstellt,
$v$ die Geschwindigkeit darstellt, wobei $v^n$ dieser Geschwindigkeit zu einem Zeitpunkt $n$ entspricht und $v^{n+1}$ der Geschwindigkeit zu dem Zeitpunkt $n+1$ entspricht,
$p_1$ einen statischen Druck darstellt.

## Claims

1. A measurement method of measuring the unsteady flow velocity of a fluid, of the type comprising the following steps:
   i) detecting instants at which the acceleration of the fluid is zero (62);
   ii) defining a measurement of the fluid velocity at instants where the acceleration is zero (63); and
   iii) correcting (64) the value of the fluid velocity obtained in step ii), between instants where the acceleration is zero, on the basis of the value of a pressure measured between said instants, the method being characterized by the fact that step ii) consists of measuring, at the same time, two static pressures in two places separated from the fluid, and determining changes in velocity between instants of zero acceleration by time numeric integration of the difference between said two static pressures ($p_1$, $p_2$), and adding (64) changes in velocity thus obtained by numeric integration, to the value of the fluid velocity obtained in step ii) at instants where the acceleration is zero.

2. A measurement method according to claim 1, further characterized by the fact that step i) of detecting instants where the acceleration of the fluid is zero is performed by calculating the present velocity.

3. A measurement method according to claim 1, further characterized by the fact that step i) for detecting instants where the acceleration of the fluid is zero is performed by detecting equality in the information provided by two static pressure taps.

4. A measurement method according to any one of claims 1 to 3, further characterized by the fact that step ii) consists in defining the velocity at instants when the acceleration is zero on the basis of the equation:

$$(8) \qquad V = \sqrt{2(p_{impact} - p_1)/\rho};$$

**14**

where

    $V$ = the modulus of the velocity

    $p_1$ = the static pressure

    $\rho$ = the local density of the fluid, and

    $p_{impact}$ = dynamic pressure on a point of impact.

5.   A measurement method according to any one of claims 1 to 4, further characterized by the fact that step iii) consists in integrating the equation:

$$(6) \qquad a(dV_0/dt) \; + \; b(V_0^2/2) \; + \; (p_1 - p_2)/\rho \; = \; 0$$

where

    $\underline{a}$ and $\underline{b}$ are constants of the system used;

    $V_0$ = the modulus of the velocity;

    $p_1$ and $p_2$ are the pressures measured at the same instant at two points of the system; and

    $\rho$ = the local density of the fluid.

6.   A measurement method according to any one of claims 1 to 4, further characterized by the fact that step iii) consists in integrating equation:

$$(7) \qquad (dV_0/dt) \; + \; (p_1 - p_2)/\rho l \; = \; 0$$

where

    $V_0$ = the modulus of the velocity

    $p_1$ and $p_2$ are the pressures measured at the same instant at two points of the system

    $l$ represents the distance between the two measurement points; and

    $\rho$ = the local density of the fluid.

7.   A measurement method according to any one of claims 1 to 4, further characterized by the fact that step iii) consists in integrating the equation:

$$(13) \qquad \alpha \rho l (\partial v/\partial t) \; = \; (p - p_0) \; + \; \tfrac{1}{2}\rho v^2$$

where

    $\alpha$ is a kinetic energy coefficient;

    $v$ represents the velocity;

    $\rho$ represents the local density of the fluid;

    $l$ represents the distance between an opening to the duct and a static pressure tap measuring the pressure $\underline{p}$; and

    $p_0$ represents atmospheric pressure.

8.   Measuring apparatus for measuring the unsteady flow velocity of a fluid by implementing the method according to any one of claims 1 to 7, comprising:

    means (62) suitable for detecting instants at which the acceleration of the fluid is zero;

    means (63) suitable for defining a measurement of the fluid velocity at instants when its acceleration is zero;

    means (64) suitable for correcting the value of the fluid velocity obtained between instants where the acceleration is zero, on the basis of the value of a pressure measured between said instants; and

    means (65) suitable for expressing the value of the velocity;

    the method being characterized by the fact that the correcting means comprise:

    means suitable for measuring, at the same time, two static pressures ($p_1$, $p_2$) in two places separated from the fluid, and;

    means (63) suitable for determining changes in the velocity between instants of zero acceleration by time numeric integration of the difference between said two static pressures ($p_1$, $p_2$), and means (64) suitable for adding changes in velocity obtained by numeric integration, to the value of the fluid velocity obtained, at instants where the acceleration is zero.

9.   Measuring apparatus according to claim 8, further characterized by the fact that the means (62) suitable for detecting instants at which the acceleration of the fluid is zero comprise two static pressure taps (14, 16) and means suitable for monitoring when the two measured pressures are equal.

10.  Measuring apparatus according to claim 8, further characterized by the fact that the means (62) suitable for detecting instants at which fluid acceleration is zero comprise means for monitoring the calculated velocity.

11. Measuring apparatus according to claim 8 or 9, further characterized by the fact that it includes a Pitot tube type obstacle (10) fitted with three pressure taps (14, 16, 18).

12. Measuring apparatus according to claim 11, further characterized by the fact that it comprises two static pressure taps (51, 57) spaced apart over a portion (52) of the obstacle (50) that extends parallel to the flow, an impact pressure tap (58) at the tip of the obstacle, and two differential pressure sensors (c1, c2) or else three absolute pressure sensors.

13. Measuring apparatus according to claim 12, further characterized by the fact that the means suitable for defining the measured fluid velocity at instants when acceleration is zero make use of the equation:

$$(8) \qquad v = \sqrt{2(p_{impact} - p_1)/\rho} \; ; \text{ and}$$

the means suitable for determining changes in velocity make use of the following equation:

$$(7) \qquad (dV_0/dt) + (p_1 - p_2)/\rho l = 0;$$

where

$V_0$ and $v$ = the modulus of velocity;

$p_{impact}$ = dynamic pressure on a point of impact;

$p_1$ and $p_2$ = two static pressures measured at the same instant at two points of the system;

$\rho$ = the local density of the fluid; and

$l$ = the distance between the two measurement points.

14. Measuring apparatus according to claim 8 or 9, further characterized by the fact that it comprises a duct (30, 40) provided with a narrowing (32, 42) and with three pressure taps (35, 36, 37; 45, 46, 47).

15. Measuring apparatus according to claim 14, further characterized by the fact that the means for detecting instants of zero acceleration comprise means for detecting when two first-mentioned static pressures ($p_1$, $p_2$) measured at a distance apart on a constant section portion of the duct are equal, the means defining the measure of the fluid velocity at instants of zero acceleration making use of the pressure difference between one of the above pressures and the third pressure ($p_3$) measured on a differential section zone of the duct, and the means for determining changes in velocity integrating the difference between the first two above-mentioned pressures.

16. Measuring apparatus according to claim 15, further characterized by the fact that the first-mentioned two static pressures ($p_1$, $p_2$) are taken from a constant section portion of the duct whereas the third pressure ($p_3$) is taken from a flared opening (22) of the duct.

17. Measuring apparatus according to claim 15, further characterized by the fact that the two first-mentioned static pressures ($p_1$, $p_2$) are taken at a distance apart on a constant section portion of the duct whereas the third static pressure ($p_3$) is measured at a narrowing (32) thereof.

18. Measuring apparatus according to claim 15, further characterized by the fact that the two first-mentioned static pressures ($p_1$, $p_2$) are measured at a constant section narrowing (42) of the duct whereas the third static pressure ($p_3$) is measured away from the narrowing.

19. Measuring apparatus according to claim 8 or 18, further characterized by the fact that it includes a streamlined duct (70), a static pressure sensor (73) on the wall of the duct, and a total pressure sensor (74).

20. Measuring apparatus according to claim 19, further characterized by the fact that:

the means (62) suitable for detecting instants of zero acceleration monitor the calculated velocity;

the means (63) defining the velocity at instants of zero acceleration make use of the following equation:

$$(17) \qquad v = \sqrt{2(p_{impact} - p_1)/\rho}$$

the means (64) determining changes in the velocity between instants of zero acceleration make use of the following equation:

$$(15) \qquad v^{n+1} = v^n - (\delta t/\alpha \rho l)(p - p_0 + \tfrac{1}{2}\rho(v^n)^2)$$

where

$\alpha$ represents a kinetic energy coefficient;

$\rho$ represents the density of the fluid;

*l* represents the distance between the static pressure tap (73) and the opening of the duct;

p represents the static pressure;

$p_0$ represents atmospheric pressure;

$p_{impact}$ represents the total pressure;

v represents the velocity, with $v^n$ corresponding to said velocity at an instant $\underline{n}$ and $v^{n+1}$ corresponding to the velocity at the instant n+1; and

$p_1$ represents a static pressure.

$V_0$

FIG.1

12    14    16    10

18  $P_{arrêt}$    $P_1$    $P_2$

$\ell$

20

$P_3$    25    $P_1$    $P_2$    26

22

$V_0$

24

FIG.2A

35    36    37    30

$P_1$    $P_2$    $P_3$

$V_0$

32

FIG.2B

$P_3$    45  $P_1$    $P_2$    46

47

$V_0$

40    42

FIG.2C

FIG.8

FIG.3

Procédure de démarrage —— 60

Acquisition de $(P_1 - P_2)$ et $(P_{arrêt} - P_1)$ —— 61

$(P_1 - P_2) = 0$ —— 62

64

$$v^{n+1} = v^n + \frac{\Delta t}{\rho \ell}(P_1 - P_2)$$

63

$$v^{n+1} = \sqrt{2\frac{(P_{arrêt} - P_1)}{\rho}}$$

65 —— Sortie analogique

## FIG. 4

$\vec{\Sigma_o}$
$\vec{v_o}, P_o$

D

$\Sigma$

$\vec{v}$

$\vec{n}$

70

d

P

l

## FIG. 6

72

74

71

73

70

d

$\square$ c2

$\square$ c1

l

c1 : Capteur de pression statique

c2 : Capteur de pression totale

Sens de l'écoulement moyen

## FIG. 7

FIG_5